# EUROPEAN PATENT SPECIFICATION

(11) **EP 3 597 814 B1**
(45) Date of publication and mention of the grant of the patent: **14.04.2021**
(21) Application number: 19176810.0
(22) Date of filing: 27.05.2019
(51) Int. Cl.: D06F 57/08, D06F 53/04, D06F 57/06, F16B 7/10

(54) **TELESCOPIC CLOTHES DRYING RACK**
TELESKOPISCHER WÄSCHESTÄNDER
ÉTENDOIR TÉLÉSCOPIQUE POUR VÊTEMENTS

(30) Priority: 16.07.2018 IT 201800007241
(43) Date of publication of application: 22.01.2020
(73) Proprietor: FILPLAST SRL., 63833 Montegiorgio (FM) (IT)
(72) Inventor: ANDREANI, Andrea, 63833 Montegiorgio (FM) (IT)
(74) Representative: Baldi, Claudio

(56) References cited:
- WO-A2-2011/021810
- CN-U- 204 626 071
- US-A- 1 510 272

## Description

The present patent application for industrial invention relates to a high-performance telescopic clothes drying rack.

As it is known, a typical telescopic or vertical clothes drying rack is especially conceived to minimize its volume when not used and comprises a frame formed of a plurality of vertical portal-like structures; each of said portal-like structure is formed of a pair of tubular uprights that are connected on top by a crossbar.

In such a situation, the uprights of each one of said portal-like structures can alternately slide in a telescopic way, relative to the pair of uprights that belong to the portal-like structure in immediately lower position, as known from US1510272.

In such a way, similar clothes drying racks can be alternately disposed in an operating extended position and in a non-operating contracted position to minimize their vertical volume.

In the first case, the pair of uprights of one of said portal-like structures is almost completely extracted from the pair of uprights of the portal-like structure in immediately lower position, whereas in the second case, following to a downward sliding movement, the pair of uprights of one of said portal-like structures is almost completely inserted in the uprights of the portal-like structure in immediately lower position.

The capability of reducing the volume, which is typical of this type of clothes drying racks, affects also the width because each one of said portal-like structures is provided on the two sides of the crossbar with a pair of tilting grilles that are used to support the laundry.

As a matter of fact, the grilles of each pair can be alternately disposed in an operating extended position, which is basically horizontal, and in a non-operating closed position, which is basically vertical, in a close, parallel position relative to the portal-like structure.

Moreover, it must be considered that the pairs of grilles of said portal-like structures are provided with supporting and articulation means, so that the two grilles of the upper portal-like structure can contain the two grilles of the portal-like structure in immediately lower position when they are in their non-operating basically vertical position, after they have reached the non-operating position.

It can be otherwise said that, in such a situation, the pairs of grilles of the portal-like structures form a sort of "pack" on each side of the frame of the clothes drying rack, which is composed of the grilles in basically vertical position, one inside the other one.

Moreover, it must be noted that a typical telescopic clothes drying rack is also provided with locking/unlocking means disposed between the lower ends of the uprights of each portal-like structure and the upper ends of the uprights of the portal-like structure in immediately lower position.

In particular, the function of the locking means is to permit the upper portal-like structure to firmly maintain its extracted position relative to the portal-like structure in immediately lower position; whereas the function of the unlocking means is to ensure that the uprights of the upper portal-like structure can be freely exposed to gravity, in such a way to be reinserted inside the uprights of the portal-like structure in immediately lower position.

Likewise, locking/unlocking means are provided for each pair of said grilles used to support the laundry in order to firmly maintain the grilles in horizontal operating position and expose them to gravity in such a way to reach the non-operating vertical position, respectively.

WO2011/021810 discloses a clothes drying rack that can be gradually folded and comprises a support unit, at least one fastening unit that is connected to the support unit to hang a garment, and a base unit that is connected to a lower end of the support unit in order to support the support unit.

Starting from a similar description of a typical telescopic clothes drying rack, it must be noted that the applicant of this patent application is the holder of the utility model no. 279425 filed on 12.03.2013 for a specific clothes drying rack of this type.

By means of the aforementioned utility model, exclusive protection was requested for the specific solutions used to improve the rapidity and effectiveness of the locking/unlocking operations of the uprights of the portal-like structures, and of the locking/unlocking operations of the two grilles of each portal-like structure.

The solution that was adopted to obtain the locking/unlocking of the uprights of said portal-like structure is briefly described with reference to some of the figures that are appended to said utility model no. 279425, which are suitably included in some drawings that are identified in this patent application with the expression "Prior Art".

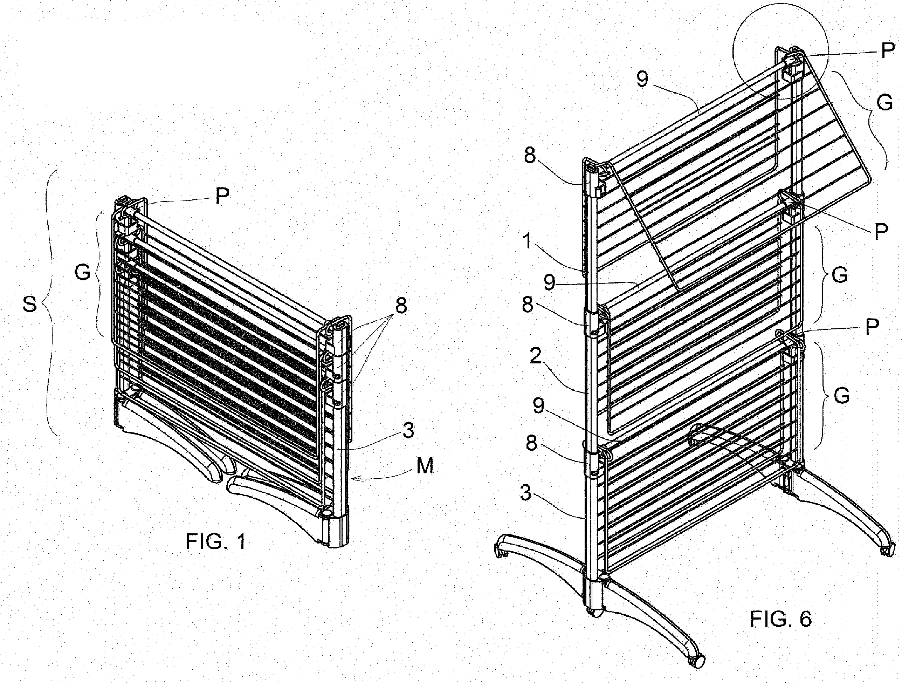

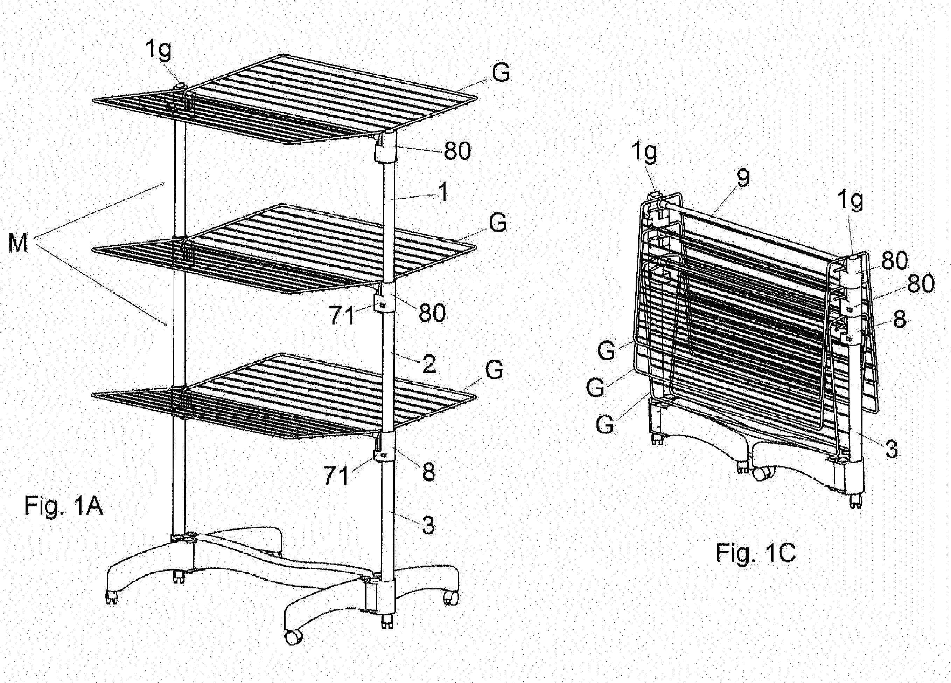

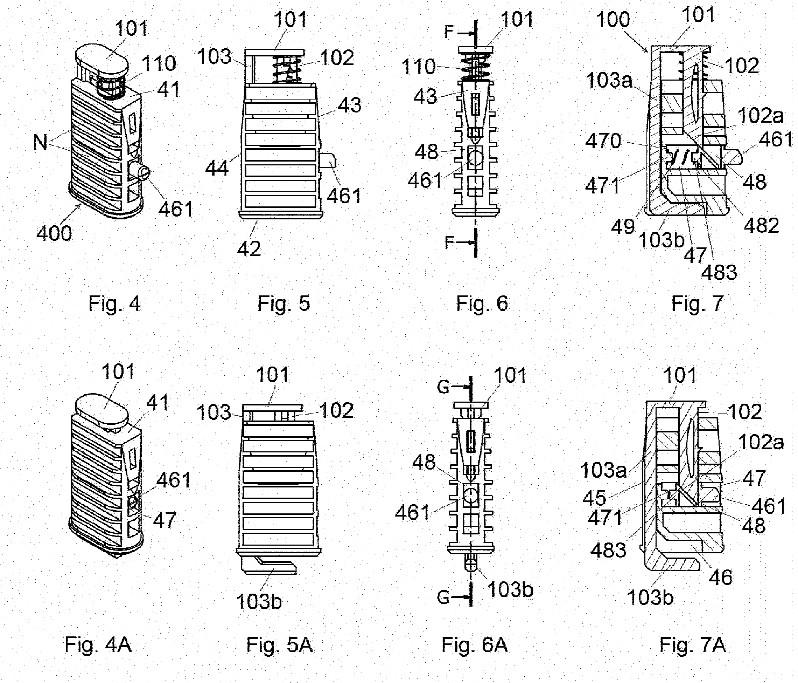

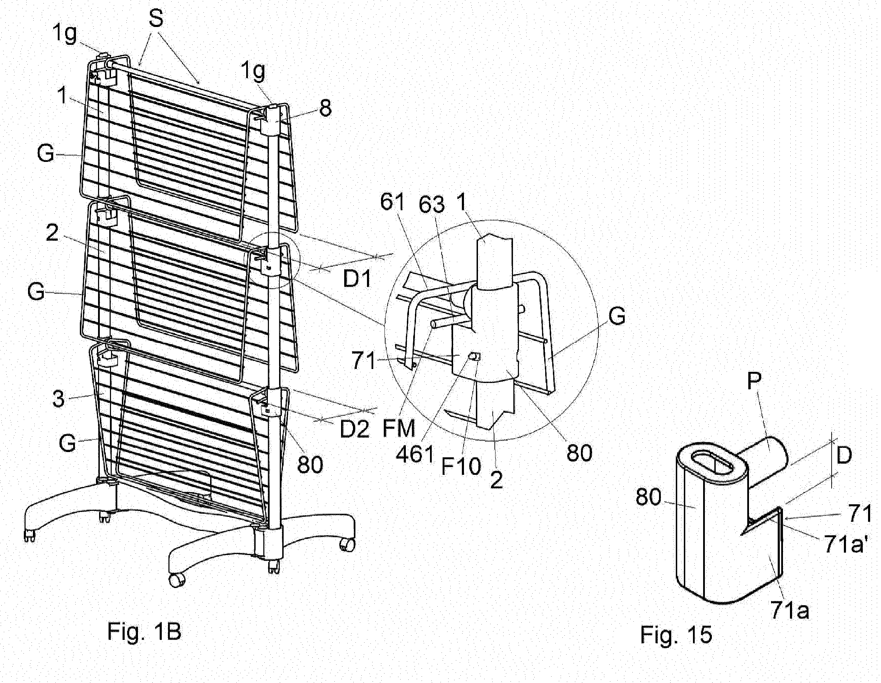

In particular, the "Prior Art" drawing no. 1 contains Fig. 6 and Fig. 1 of the utility model no. 279425, which relate to a telescopic clothes drying rack that is respectively shown with the vertical frame in operating extended position and in non-operating contracted position.

As shown in the aforementioned figures, the patented clothes drying rack is provided with two uprights (M) that protrude from ground-resting feet and have a telescopic structure.

Each one of said uprights (M) is formed of three tubular rods (1, 2, 3) that are capable of mutually sliding, being provided with the same profile - specifically a substantially elliptical profile - but sections with different width.

In view of the above, the first one (1) of said rods can alternately slide inside the second one (2), and the second one (2) can alternately slide inside the third one (3).

Evidently, the first two rods (1) of said uprights (M), as well as the two second rods (2) and the two third rods (3), are connected on top by crossbars (9) in such a way to form portal-like structures.

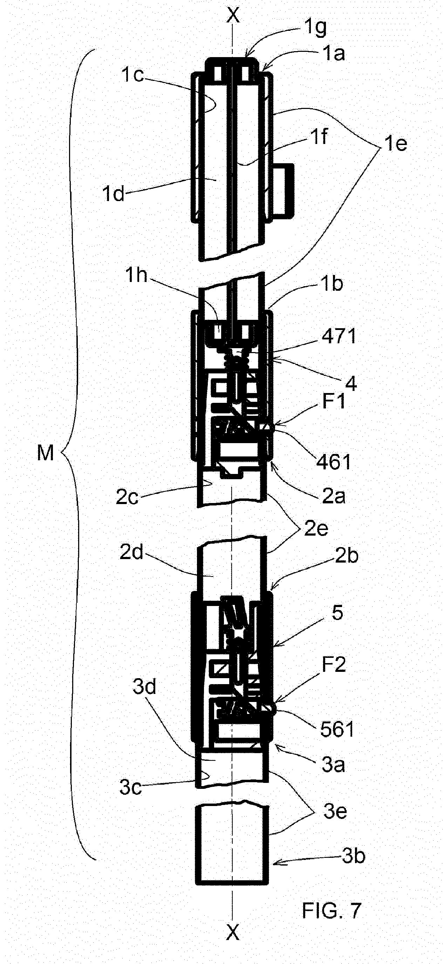

The "Prior Art" drawing no. 2 contains Fig. 7 of the utility model no. 279425, which is expressly intended to show the solution used for mutually locking and unlocking said sliding rods (1, 2, 3), which are comprised in each one of said uprights (M) of the clothes drying rack.

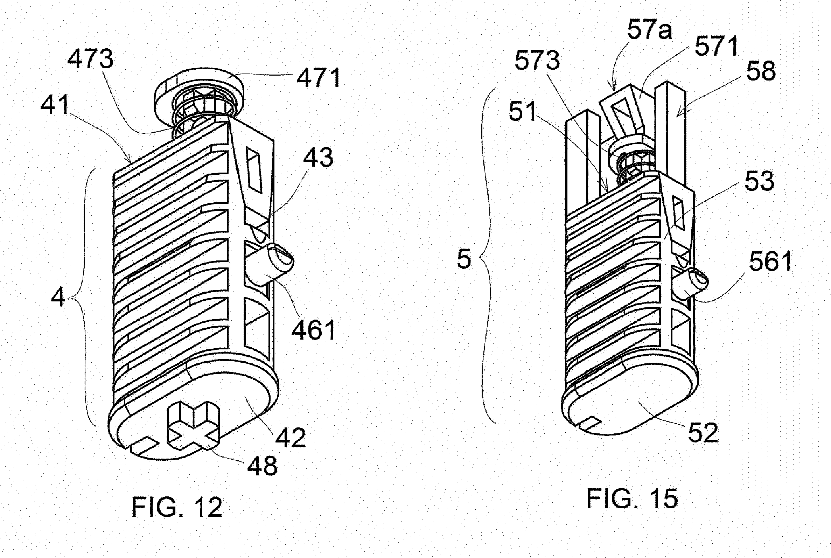

The "Prior Art" drawing no. 3 contains Fig. 12 and Fig. 15 of the utility model no. 279425, which respectively show the specific locking/unlocking means (4) disposed in intermediate position between the first rod (1) and the second rod (2) of each upright (M) and the locking/unlocking means (5) disposed in intermediate position between the second rod (2) and the third rod (3).

The observation of the aforementioned Prior Art drawings shows that the unlocking of the first rods (1) of said two uprights (M) from the second rods (2) - which is necessary to bring the clothes drying rack to the compacted position - is obtained because:
- the first rod (1) of each upright (M) axially houses a sliding stem (1f), the upper end (1g) of which protrudes like a button from the upper end (1a) of said first rod (1)
- a pressure exerted on the upper end (1g) of said sliding stem (1f) determines a descending travel of the sliding stem (1f) inside the first rod (1)
- due to said descending travel, the lower end (1h) of said stem (1f) interferes with the enlarged head (471) of a sliding blade with vertical axis provided in a locking/unlocking device (4) that is suitably inserted in the lower end (1b) of said first rod (1)
- the interference exerted by the lower end (1h) of the sliding stem (1f) of the first rod (1) against the enlarged head (471) of said blade of the first locking/unlocking device (4) determines the backward travel of a pin with horizontal axis (461) that is suitable actuated by the blade and protrudes laterally from the first locking/unlocking device (4)
- due to the backward travel, said pin with horizontal axis (461) of said first locking/unlocking means (4) is extracted from an insertion hole (F1) obtained on the side of the second rod (2) towards the top
- due to the extraction of said pin (461) of the locking/unlocking device (4) of the first rod (1) from the insertion hole (F1) on the second rod (2), the first rod (1) is no longer constrained by the second rod (2) and is exposed again to gravity in such a way to slide freely inside the second rod (2) for almost its entire length.

Moreover, the observation of the aforementioned Prior Art drawings shows that the unlocking of the second rods (2) of said two uprights (M) from the third rods (3) - which is necessary to completely compact the clothes drying rack in vertical direction - is obtained because:
- each of said second rods (2) is provided on its lower end (2b) with a locking/unlocking device (5) that operates relative to the third rod (3)
- due to the previous deep insertion of each first rod (1) inside the second rod (2), the lower wall (42) of said first locking/unlocking device (4) is brought in contact with two vertical stop means (58) provided on top of the second locking/unlocking device (5), thus generating the perfect alignment between a protuberance (48) provided in the center of said lower wall (42) of the first locking/unlocking device (400) and the enlarged head (571) of a sliding blade with vertical axis that belongs to said second locking/unlocking device (5) and operates between said two stop means (58)
- a pressure exerted on the crossbar (9) that connects the first two rods (1) determines an additional downward descending travel of the first locking/unlocking devices (4) inserted in the lower ends (1b) of said first rods (1)
- due to said additional downward descending travel of said first locking/unlocking devices (4), said protuberance (48) provided under the lower horizontal wall (42) compresses said enlarged head (571) of said sliding blade of the second locking/unlocking device (5), so that the downward descending travel imposed on said blade favors the backward movement of a pin with horizontal axis (561) that protrudes laterally from said second locking/unlocking device (5)
- due to its backward movement, said pin with horizontal axis (561) of the second locking/unlocking means (5) provided in the second rod (2) is extracted from an insertion hole (F2) obtained on the side of the third rod (3) towards the top
- due to the extraction of said pin (561) of the second locking/unlocking device (5) from the insertion hole (F2) on the third rod (3), the second rod (2) is no longer constrained by the third rod (3) and is exposed again to gravity, in such a way to slide freely inside the third rod (3) for almost its entire length.

While being characterized by an effective use, the clothes drying rack of said utility model no. 279425 is considered to be susceptible of being additionally improved with reference to the ways in which the second rods (2) are unlocked from said third rods (3) when the clothes drying rack is completely compacted in vertical direction.

As already mentioned, in fact, according to said patented clothes drying rack, the second rods (2) are unlocked from the third rods (3) in a basically empiric way, by simply pressing the crossbar (9) that connects the first rods (1), after unlocking and inserting the two first rods (1) in the second rods (2).

Such an operating feature has generated a specific drawback consisting in the fact that, while unlocking the first rods (1) from the second rods (2), also the second rods (2) are spontaneously and therefore undesirably unlocked from the third rods (3).

Moreover, such an uncontrolled unlocking of the second rods (2) tends to be rather abrupt, noisy and difficult to deal with.

In order to solve such a specific drawback of the clothes drying rack according to the utility model no. 279425, the applicant has introduced a different principle to unlock the second rods (2) from the third rods (3) in the new clothes drying rack of the invention.

In particular, as illustrated below, the applicant has introduced a solution for the controlled unlocking of the second rods (2) of each upright (M), according to which the second rods (2) can be finally unlocked from the third rods (3) only upon a precise command from the user, thus completely eliminating the risks related with an accidental, undesirable unlocking.

The inventive idea that has allowed achieving such a purpose consists in the fact that the unlocking of the second rods (2) from the third rods (3) is obtained by pressing a specific unlocking means, in the same exact way as the unlocking of the first rods (1) from the second rods (1).

The advantage of such an inventive solution is related to the fact that the same button that was used in the patented clothes drying rack to unlock the first rods (1) from the second rods (2) can be now used to unlock the second rods (2) from the third rods (3) by means of an additional pressure exerted on the button.

Moreover, the new clothing rack of the invention also intends to improve the performance of the clothes drying rack claimed in the utility model no. 279524, more precisely with reference to the unlocking and locking of the tilting grilles that are used to support the laundry to be dried.

In view of the above, it is necessary to illustrate the structure and the use of the tilting grilles that are provided in said patented clothing rack, referring to two additional "Prior Art" drawings: in particular, reference is made to drawing 4 and drawing 5 that respectively show Fig. 6 and Fig. 8, and Fig. 9, Fig. 10 and Fig. 11 of said utility model no. 279425.

The observation of these additional drawings shows that each of said portal-like structures of said clothes drying rack - each of them for a corresponding pair of said rods (1, 2, 3) - is associated with an opposite pair of tilting grilles (G).

In order to illustrate the way in which said grilles (G) are assembled and supported, it must be noted that each of said first rods (1), second rods (2) and third rods (3) is provided with a special sleeve (8) that is forcedly inserted in the upper end.

Each sleeve (8) is provided on the internal side (i.e. the side facing the center of the clothing rack) with a tubular pin with horizontal axis (P) and a shelf (71) with substantially square shape, which defines a hole with vertical axis (7).

The pin (P) has a double function: the first function is to exactly receive the end of said crossbar (9) used to connect the pairs of first rods (1), second rods (2) and third rods (3).

The second function of said pin (P) is to act as fastening and rotation means for the ends of said tilting grilles (G).

As a matter of fact, the lateral end of each of said grilles (G) is provided with a U-shaped hook (6) that comprises a first rectilinear section (61) perpendicular to the plane where the grille (G) lies, and a second semicircular section (62) that acts as connection with a third rectilinear section (63) parallel to said first section (61).

Moreover, the length of said first section (61) and second section (62) of the hook (6) is considerably higher than the diameter of said pin (P) provided in each sleeve (8), whereas the second semicircular section (62) of the hook (6) is suitable for exactly receiving the pin (P) in such a way to use the pin (P) for holding and rotation purposes.

As a matter of fact, each of said hooks (6) of each grille (G) is suitable for being fastened to one of said pins (P) with the possibility of rotating, and therefore with the possibility of favoring a change in the position of the grille (G) relative to the portal-like structure.

Until the grille (G) is to be maintained in non-operating vertical position, the hooks (6) are disposed in horizontal position, wherein said first section (61) of each hook (6) is rested on the corresponding pin (P), whereas the second semicircular section (62) surrounds the pin (P) from the opposite side relative to the side whereon the grille (G) lies, thus preventing the grille (G) from accidentally losing the coupling with said pin (P).

Considering that the "depth" of each of the hooks (6) is higher than the diameter of the pin (P), it is clearly understood that the position of the hook (6) can be adjusted relative to the pin (P) by sliding the hook (6) horizontally relative to the pin (P), according to the distance to be imposed to the grille (G) in vertical position relative to the pair of rods (1, 2, 3).

Because of the fact that the distance of the two tilting grilles (G) of each portal-like structure of a similar clothes drying rack can be adjusted, when the clothes drying rack is brought to its compact vertical position, the user can adjust the position of said grilles (G) in such a way that the pair of grilles (G) provided in the portal-like structure formed of the two first rods (1) can externally "embrace" the corresponding pair of grilles (G) provided in the portal-like structure formed by the two second rods (2). Likewise, the pair of grilles (G) provided in the portal-like structure formed by the two second rods (2) can externally "embrace" the corresponding pair of grilles (G) provided in the portal-like structure formed by the two third rods (3).

On the contrary, when each of said tilting grilles (8) is to be disposed in operating horizontal position - after an outward-upward rotation relative to the corresponding portal-like structure - the lateral edge of the corresponding grille directly lies on the pin (P), in such a condition that the hook (6) is disposed in a substantially vertical position, with said second semicircular section (62) directed towards the ground.

Moreover, considering that the "depth" of said hook (6) is considerably higher than the diameter of the pin (P), it must be noted that another important condition is generated when said lateral edge of the grille (G) lies on the pin (P).

Reference is made to the fact that said second section (62) of the hook (6), and partially also said two first section (61) and third section (63) that are joined with said second section (62), are exactly inserted in said hole with vertical axis (7) defined by the shelf (71) that is suitably disposed under the pin (P).

It can be easily understood that such an exact insertion of the curved portion of the hook (6) in said hole (7) stabilizes the horizontal operating position of the grille (G) due to the fact that the accidental rotation of the grille (G) is prevented because each one of its lateral hooks (6) is exactly inserted in the shelf (71) in its substantially vertical position.

In view of the above, a new rotation of the grille (G), which is necessary to bring the grille (G) to its non-operating vertical position, can be imposed only after slightly lifting the grille (G) from the corresponding pair of pins (P), in such a way to extract the curved portions of the hooks (6) from the shelves (71).

In spite of being rather effective from a practical side, such a similar technology is susceptible of being additionally improved in order to optimize the performance of the clothes drying rack when brought to a compact position.

In such a condition, the pair of tilting grilles (G) of the first pair of rods (1) is suitable for embracing the two grilles (G) of the second pair of rods (2) in such a way to entirely contain them. Likewise, the grilles (G) of said second pair of rods (2) embrace the two grilles (G) of the third pair of rods (3).

In the clothes drying rack of the utility model no. 279425, while the first rods (1) slide downwards inside the second rods (2) and the second rods (2) slide downwards inside the third rods (3), the user must check manually that the pairs of tilting grilles (G) can correctly form the "compact" pack on each side of the clothes drying rack, putting the grille of the first pair of rods (1), the grille of the second pair of rods (2) and the grille of the third pair of rods (3) in close contact, from outwards inwards.

In order to achieve such an advantageous result, the two grilles of the third pair of rods (3) need to be disposed at a very short distance; the two grilles of the second pair of rods (2) need to be disposed at a slightly higher distance and the two grilles of the first pair of rods (1) need to be disposed at an even higher distance.

Evidently, the possibility of imposing a different distance between the three pairs of grilles (G) is given by the fact that the "depth" of the hooks (6) of each pair of grilles (G) is higher than the diameter of the pins (P). In view of the above, when in horizontal position, said hooks can slide in a different way relative to the pins (P), without being uncoupled from the pins (P).

In view of such a problem - which consists in the necessity to manually adjust the mutual position of the various pairs of grilles (G) when the clothes drying rack is brought to its compact position - a device has been introduced in order to guarantee that, when in a substantially non-operating vertical position, the two grilles (G) associated with the first pair of rods (1) and with the second pair of rods (2) can spontaneously maintain such a mutual distance to exactly "embrace" the pair of grilles in immediately lower position during the downward descending travel.

Such a specific device, which specifically refers to the structure of said shelf provided in each one of the sleeves (8) inserted on top of each upright (1, 2, 3), is illustrated below.

For the sake of clarity, the description of the invention continues with reference to the appended drawings, which have a merely illustrative, not limiting value, wherein:
- Fig. 1A is an axonometric view of the new clothes drying rack of the invention when the uprights are in extended position and the grilles are in operating horizontal position;
- Fig. 1B is an axonometric view of the clothes drying rack of the invention when the uprights are in extended position and the grilles are in a non-operating basically vertical position;
- Fig. 1C is an axonometric view of the new clothes drying rack of the invention when the uprights are in contracted position and the grilles are in a non-operating basically vertical position;
- Fig. 2 is a sectional view taken along a vertical plane of one of the uprights of the clothes drying rack, with some enlarged details;
- Fig. 3 is an axonometric view of the slider that is housed inside the first locking/unlocking device of said clothes drying rack;
- Figs. 4, 5 and 6 are respectively an axonometric view, a front view, and a side view of the first locking/unlocking device provided in said clothes drying rack, until its horizontal locking pin is in extracted position;
- Fig. 7 is a sectional view of Fig. 6 taken along plane F-F;
- Figs. 4A, 5A and 6A are respectively an axonometric view, a front view, and a side view of the first locking/unlocking device provided in said clothes drying rack, until its horizontal locking pin is in retracted position;
- Fig. 7A is a sectional view of Fig. 6A taken along plane G-G;

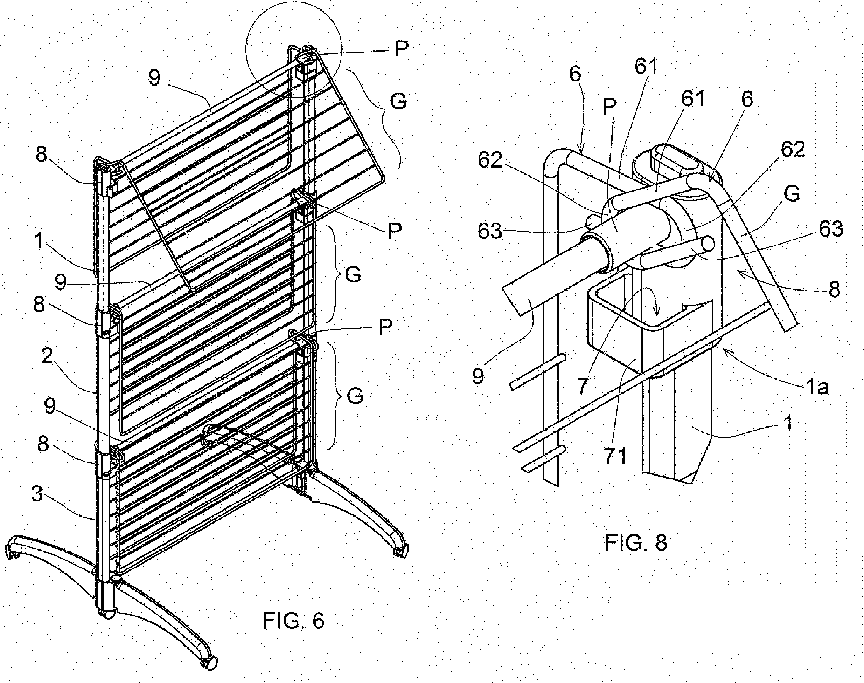

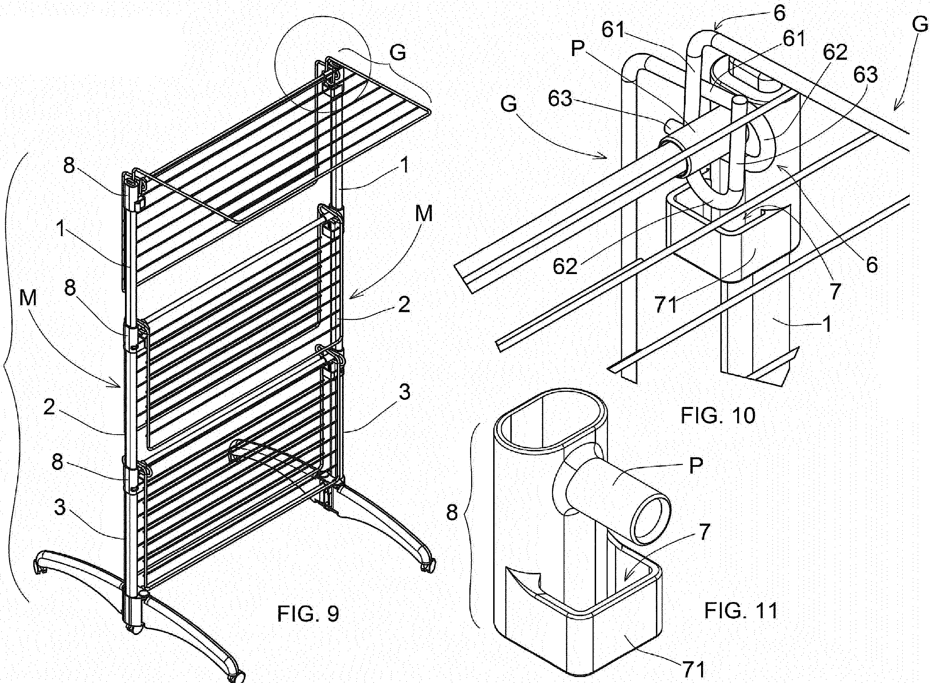

- Figs. 8 and 9 are respectively an axonometric view and a sectional view taken along a vertical plane of the second locking/unlocking device provided in said clothes drying rack, until its horizontal locking pin is in extracted position;
- Figs. 10 and 11 are axonometric views of the button and of the slider for said locking pin provided in said second locking/unlocking device;

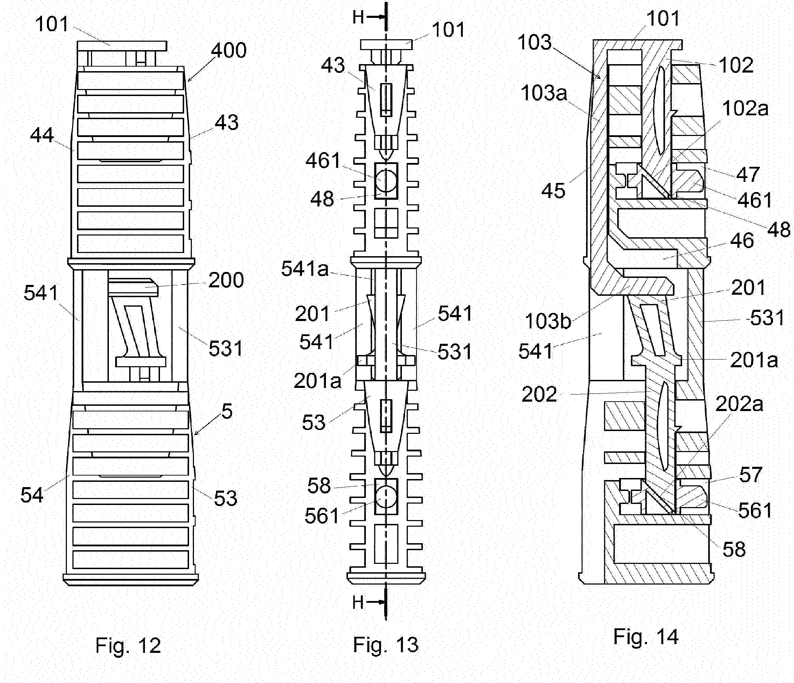

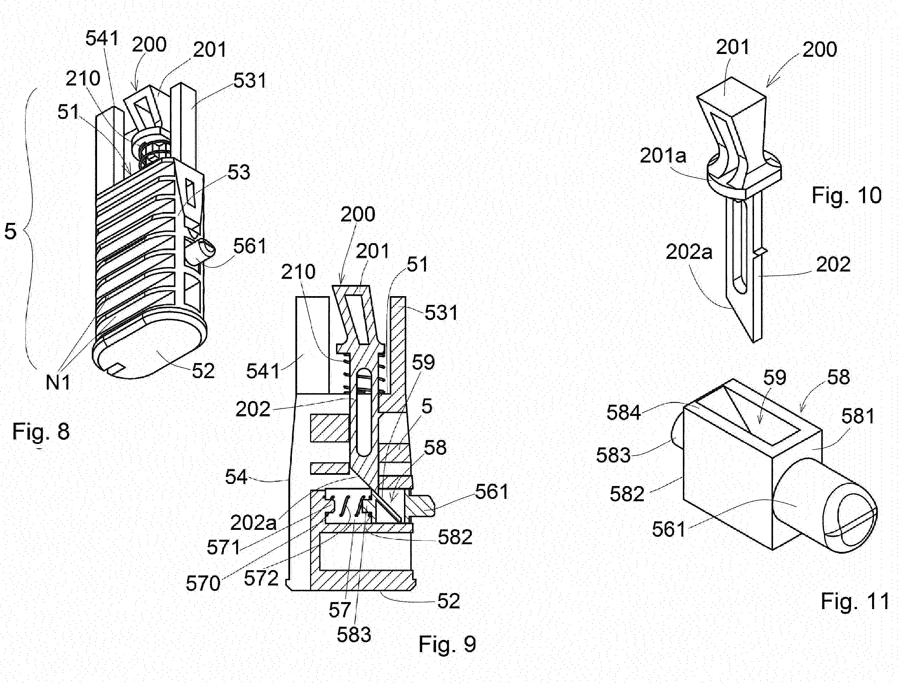

- Figs. 12 and 13 show the cooperation mode of a first locking/unlocking device with a second locking/unlocking device, when the locking pins of the first and the second locking/unlocking device are in retracted position;
- Fig. 14 is a sectional view of Fig. 13 taken along plane H-H;
- Fig. 15 is an axonometric view of one of the sleeves provided in said first rods and said second rods of the uprights of the clothes drying rack of the invention.

With reference to the aforementioned figures, the telescopic clothes drying rack of the invention (S) comprises a frame composed of two identical uprights (M), each of them being formed of three tubular rods (1, 2, 3), and particularly:
- a first rod (1) provided on top of the upright (M):
- a second rod (2) inside which said first rod (1) telescopically slides;
- a third rod (3) inside which said second rod (2) telescopically slides.

It must be noted that the rods (1, 2, 3) of each upright (M) are tubular and that the width of said first rod (1) is lower than the width of the second rod (2), in such a way to be housed inside the second rod (2), whereas the width of said second rod (2) is lower than the width of the third rod (3).

Each upright (M) of the telescopic clothes drying rack (S) can be disposed in two positions:
- a non-operating contracted position, wherein said first rod (1) is almost completely housed inside the second rod (2), which is in turn almost completely housed inside the third rod (3);
- an operating extended position, wherein said first rod (1) is almost completely extracted from the second rod (2), which is in turn almost completely extracted from the third rod (3).

Moreover, it must be noted that the upper end (1a, 2a, 3a) of each one of said first rod (1), second rod (2) and third rod (3) is forcedly inserted in axial direction inside a sleeve (8, 80), wherefrom a tubular pin (P) and a shelf (71) protrude horizontally, towards the center of the clothes drying rack (S), said shelf (71) being suitable for defining a basically square hole (7), being formed of two lateral edges (7a) that project from the sleeve (8) and from a front wall used to join said lateral edges (7a); reference is made to Figs.1B and 15.

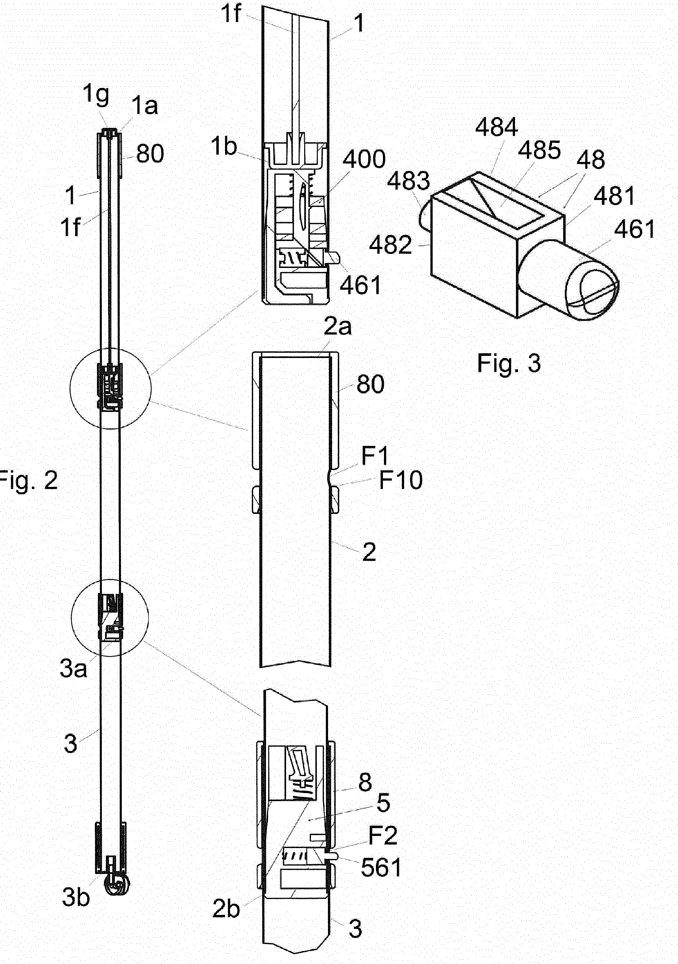

With reference to Fig. 2, each one of said first rods (1) is internally provided with an axial sliding stem (1f), the upper end (1g) of which projects for a short section from the upper end (1a) of said first rod (1), in such a way that by pressing the upper end (1g), as if it were a button, the user can enable a downward descending travel of the entire stem (1f).

Moreover, said sliding stem (1f) is subject to the action of a return spring (not shown in the appended figures), which spontaneously brings the sliding stem (1f) to its initial position as soon as the user stops pressing the upper end (1g).

A first locking/unlocking device (400) is exactly inserted in the lower end (1b) of said first rod (1), whereas a second locking/unlocking device (5) is exactly inserted in the lower end of said second rod (400).

When in locked position, the function of said devices (400, 5) is to maintain the three rods (1, 2, 3) of each upright (M) in extended position, as shown in Figs. 1A and 1B.

When in unlocked position, the alternative function of said first device (400) and second device (5) is to release the three rods (1, 2, 3) from any mutual constraint, allowing them to be deeply inserted one inside the other one, as shown in Fig. 1C.

The specific locking means of the rods (1, 2, 3) provided in said first device (400) and second device (5) consists in a pin with horizontal axis (461, 561), which is suitable for projecting on one side of the first device (400) and of the second device (5) and is also suitable for moving backwards by means of suitable control means, when said rods (1, 2, 3) are unlocked. Reference is made to the observation of Fig. 2 and of its enlarged details.

As a matter of fact, said first locking/unlocking device (400) is disposed in such a position inside the lower end (1b) of the first rod (1) that its pin with horizontal axis (461) can pass through a radial hole obtained on said first rod (1) and can be inserted - in the extended position of each upright (M) - inside a similar radial hole (F1) obtained in a corresponding position on the upper end (2a) of the second rod (2).

Likewise, also the pin with horizontal axis (561) of the second locking/unlocking device (5) - when the latter is inserted inside the lower end (2b) of the second rod (2) - is capable of passing through a radial hole obtained on said second rod (2) and of being inserted - in the extended position of each upright (M) - inside a similar radial hole (F2) obtained in a corresponding position on the upper end (3a) of the third rod (3).

The present description continues with reference to Figs. 3 to 7A, which refer to the first one of the innovative components used by the clothes drying rack of the invention compared to the clothes drying rack claimed in the utility model no. 279425.

With reference to the latter figures, the first locking/unlocking device (400) provided in the clothes drying rack according to the invention (S) has a basically parallelepiped shell with vertical development, which is externally provided with two opposite sets of horizontal ribs (N).

Such a first locking/unlocking device (400) comprises an upper horizontal wall (41), a lower horizontal wall (42), a first lateral wall (43) and a second lateral wall (44) in opposite position to the first wall (43), which are suitable for joining said upper wall (41) and lower wall (42).

In particular, said second lateral wall (44) is provided with a vertical groove (45) that is joined with a horizontal groove (46) provided on said lower horizontal wall (42) for approximately half of its length.

The first lateral wall (43) is provided with the outlet of a conduit with horizontal axis (47) through which said pin with horizontal axis (461) can be moved forward or backward.

Said first locking/unlocking device (400) is provided on top with a release button (100) that is suitable for sliding along vertical alternate travels.

Such a button (100) comprises a flat head (101) wherefrom a first tab (102) and a second tab (103) project perpendicularly in lower position, lying on the central line of said upper wall (41) of said first locking/unlocking device (400) and being suitable for alternatively sliding vertically inside corresponding slides.

A pressure exerted by the user on the flat head (101) of the release button (100) determines the contemporary downward travel of said two tabs (102, 103), whereas the spontaneous ascending travel of said two tabs (102, 103), which is determined as soon as the pressure on the flat head (101) is interrupted, is enabled by a cylindrical helical spring (110) inserted on the outside of the first tab (102), in intermediate position between the flat head (101) of the button (100) and the upper wall (41) of said first locking/unlocking device (400).

The first tab (102) penetrates said first locking/unlocking device (400) through a corresponding housing that is basically obtained in the center of the first locking/unlocking device (400).

The first tab (102) ends with a point (102a) that has a 45°-inclined profile, with inclination towards said second lateral wall (44) and is disposed - when the button (100) is raised - in a position that is slightly higher than said horizontal conduit (47) where the pin (461) slides.

The second tab (103) has a basically L-shaped profile, being formed of a vertical branch (103a) that is joined at the base with a horizontal branch (103b); it being provided - when the button (100) is raised - that its vertical portion (103a) is exactly inserted in said vertical groove (45) obtained on the second lateral wall (44) of said first locking/unlocking device (4) and that its horizontal portion (103b) is engaged in said horizontal groove (46) obtained on the lower horizontal wall (42) of the first locking/unlocking device (400). For a verification of said specific conditions, reference is made to Figs. 4 to 7A.

With reference to Figs. 7 and 7A, the function of said first tab (102) is to release the coupling between the first rod (1) and the second rod (2) of the upright (M) due to its capability of moving the pin (461) provided in the first locking/unlocking device (400) backwards.

In view of the above, it must be noted that said pin (461) is mounted on the front wall (481) of a basically parallelepiped slider (48) that is suitable for exactly sliding inside said horizontal conduit (47).

As shown in Fig. 3, said slider (48) is also provided in the center of its back wall (482) with a horizontal cylindrical ridge (483) that is exactly interfaced with a similar cylindrical ridge (471) that projects from the bottom wall (470) of said horizontal conduit (47).

A helical spring (49) is horizontally inserted between the two cylindrical ridges (483, 471), constantly keeping the entire slider (48) in an advanced position until a suitable end-of-travel position where the pin (461) can project from said first lateral wall (43) of said first locking/unlocking device (400).

Moreover, it must be noted that said slider (48) is provided on its upper horizontal wall (484) with a niche (485) with a 45°-inclined profile, with inclination towards said front wall (481), which is exactly compatible with the inclined profile of the point (102a) of said first tab (102).

When the button (100) is raised, the point (102a) of said first tab (102) is disposed in a position that is slightly higher than said corresponding niche (485) provided in the slider (48).

This description continues by illustrating the consequences that are generated when the user of the clothes drying rack of the invention exerts a first pressure on said upper end (1g) of the sliding stem (1f) that is housed inside the first rod (1) of each upright (M).

Because of a similar pressure, the lower end (1h) of said sliding stem (1f) interferes with said flat head (101) of the release button (100) provided in said first locking/unlocking device (400) inserted in said lower end (1b) of the first rod (1).

This determines a downward descending travel of the entire button (100), in such a way that the point (102a) of said first tab (102) is progressively engaged inside the niche (485) of the slider (48), obtaining a progressive prismatic coupling favored by the 45°-profiles that determines a backward travel of the slider (48) towards the bottom wall of the horizontal conduit (47).

Fig. 7A shows the effects that are generated when the release button (100) reaches its lower end-of-travel position, namely:
- the flat head (101) is brought closer to the upper horizontal wall (41) of said first locking/unlocking device (400)
- the helical spring (110) disposed between the flat head (101) and the upper horizontal wall (41) is in maximum compression position
- the 45°-inclined point (102a) of the first tab (102) is perfectly and entirely engaged inside the niche (49) of said slider (48)
- the slider (48) completes its backward travel towards the bottom wall of the horizontal conduit (47)
- the helical spring (49) disposed between the slider (48) and the bottom wall of the horizontal conduit (47) is in maximum compression position
- the pin (461) disposed on the front of the slider (48) completes its backward travel and is completely contained inside said horizontal conduit (47).

Considering that said pin (461) was previously inserted in said radial hole (F1) provided in the second rod (2), it appears evident that its backward travel involves its extraction from said hole (F1), eliminating any constraint between the first rod (1) and the second rod (2) and allowing the insertion of the first rod (1) in the second rod (2) by gravity.

On the other hand, it must be noted that the function of the second tab (103) is to release the coupling between the second rod (2) and the third rod (3) of the upright (M) due to its capacity of generating the backward movement of the pin (561) provided in the second locking/unlocking device (5) inserted in the second rod (2).

In order to illustrate such an additional effect, reference is to be made to Figs. 8 to 11, which show the structure and the operation modes of said second locking/unlocking device (5), regardless of the fact that the second locking/unlocking device (5) has the same configuration as the one described and claimed in the aforementioned utility model no. 279425.

With reference to said figures, it must be noted that also the second locking/unlocking device (5) is provided with a basically parallelepiped shell with vertical development, which is externally provided with two opposite sets of horizontal ribs (N1).

Said second locking/unlocking device (5) is suitable for being inserted in the lower end (2b) of the second rod (2) of each upright (M).

Said second locking/unlocking device (5) comprises an upper horizontal wall (51), a lower horizontal wall (52), a first lateral wall (53) and a second lateral wall (54) in opposite position to the first wall (53), which are suitable for joining said upper wall (51) and lower wall (52).

The first lateral wall (53) is provided with the outlet of a conduit with horizontal axis (57) through which said pin with horizontal axis (561) can be moved forward or backward.

The upper horizontal wall (51) of said second locking/unlocking device (5) is provided with a first column (531) and a second column (541) with the same height, which protrude upwards in aligned position with said first lateral wall (53) and second lateral wall (54).

Said second column (541) is provided with a notch (541a) for its entire height.

Said second locking/unlocking device (5) is provided on top with a release button (200) that is suitable for making alternative vertical travels, and is inserted in said upper horizontal wall (51) between said two columns (531, 541).

In particular, said button (200) comprises an enlarged head (201) that is joined, with the interposition of a horizontal disk (201a), with a vertical tab (202) inserted with the possibility of making alternative sliding travels inside a housing that is basically obtained in the center of said second locking/unlocking device (5).

Moreover, said button (200) is suitable for cooperating with a precompressed helical spring (210) disposed between said disk (201a) and said upper wall (51) of said second locking/unlocking device (5).

Likewise the first locking/unlocking device (400), the point (202a) of said tab (202), which is suitably provided with a 45°-profile, determines the backward travel of said pin (561) inside the horizontal conduit (57), when the tab (202) slides downwards.

In view of the above, said horizontal pin (561) is mounted on the front wall (581) of a basically parallelepiped slider (58) that is suitable for exactly sliding inside said horizontal conduit (57).

As shown in Fig. 11, said slider (58) is also provided in the center of its back wall (582) with a horizontal cylindrical ridge (583) that is exactly interfaced with a similar cylindrical ridge (571) that projects from the bottom wall (570) of said horizontal conduit (57).

A helical spring (572) is horizontally inserted between the two cylindrical ridges (583, 571), constantly keeping the entire slider (58) in an advanced position, until a suitable end-of-travel position, in such a way that the pin (561) can project from said first lateral wall (53) of said first locking/unlocking device (5).

Moreover, it must be noted that said slider (58) is provided on its upper horizontal wall (584) with a niche (59) provided with a 45°-inclined profile with inclination towards said front wall (581), which is exactly compatible with the inclined profile of the point (202a) of said first tab (202).

When the button (200) is raised, the point (202a) of said first tab (202) is disposed in a position that is slightly higher than said corresponding niche (59) provided in the slider (58).

On the contrary, when the tab (202) makes a downward sliding movement following to the pressure of the release button (200), its point (202a) is inserted into the corresponding niche (59) of the slider (58), determining a progressive backward travel of the slider (58) and the return of the pin (561) inside the conduit (57), exactly in the same way as the first locking/unlocking device (400).

With reference to Figs. 12 to 14, this description continues by illustrating the way in which said release button (200) is pressed downwards when the second rod (2) is uncoupled from the third rod (3).

Firstly, it must be considered that such a pressure on the button (200) must be exerted after the first rod (1) is uncoupled from the second rod (2) in the upright (M); only now, in fact, the second rod (2) can be uncoupled from the third rod (3), thus allowing the upright (M) to be in maximum contracted position.

Moreover, due to the descending travel made by the first rod (1) inside the second rod (2), the first locking/unlocking device (400) provided in the first rod (1) is brought against the second locking/unlocking device (5) inserted in the lower end (2b) of the second rod (2).

For the sake of clarity, the condition is such that said lower wall (42) of the first locking/unlocking device (400) rests against the ends of said columns (531, 541) that project upwards from the upper wall (51) of the second locking/unlocking device (5).

The unlocking of the second rod (2) from the third rod (3) can be enabled by pressing again the upper end (1g) of said sliding stem (1 h) that is inserted inside the first rod (1); this is due to the fact that the pressure on the stem (1 h) actuates a real kinematic chain that also involves the first locking and unlocking device (400).

In particular, the second pressure on the upper end (1g) of the stem (1f) provided in the first rod (1) generates the following simultaneous combined effects:
- the lower end (1h) of said stem (1f) exerts a new pressure on the enlarged head (101) of the button (100) provided in the first locking/unlocking device (400)
- such a thrust discharged on the enlarged head (101) of the button (100) determines the descending travel of the first tab (102) and the second tab (103)
- due to the descending travel of the first tab (102), the 45°-point (102a) is inserted again in the corresponding niche (49) of the slider (48) of the pin (461), without causing any effect because the slider (48) is already at the end of its backward travel and therefore the pin (461) is entirely contained inside said first locking/unlocking device (400)
- due to the descending travel of the second tab (103), the horizontal branch (103b) of the second tab (103) protrudes from the groove (46) obtained on the bottom wall (42) of the first locking/unlocking device (400)
- the horizontal branch (103b) of the second tab (103) of the first locking/unlocking device (400) interferes against the enlarged head (201) of the release button (200) provided in the second locking/unlocking device (5), determining the descending travel of said head (201) between the two columns (531, 541) and the descending travel of the tab (202) inside the shell of said second locking/unlocking device (2). In view of the above, the 45°-point (202a) of the tab (202) actuates the slider (58) of the pin (561) as illustrated previously, completely returning the latter inside the guide and slide conduit (57).

Due to the backward travel inside the second locking/unlocking device (5), the pin (561) is extracted from the hole (F2) provided in the third rod (3), eliminating any constraint between the second rod (2) and the third rod (3) and allowing the insertion of the second rod (2) inside the third rod (3) by gravity.

This description continues by explaining how the second tab (103) of the first locking/unlocking device (400) can push the enlarged head (201) of the button (200) downwards, in spite of the fact that said head (201) is comprised between said two columns (531, 541) of the second locking/unlocking device (5).

A similar possibility is provided because the second column (541) has said longitudinal notch (541a) that is suitable for exactly housing the horizontal branch (103b) of the second tab (103), guaranteeing at the same time the possibility of making alternate travels inside said notch (541a).

Finally, it must be noted that he return springs associated with the button (100) and with the slider (48) of the first locking/unlocking device (4) and with the button (200) and with the slider (58) of the second locking/unlocking device (5) are all capable of bringing all the aforementioned parts to the initial "extended" position, when the repeated pressure on the end (1g) of the rod (1f) that slides inside the first rod (1) ceases.

In view of the aforementioned description, the utility and the efficiency of the clothes drying rack (S) according to the present invention are evident because of the fact that also the unlocking of the second rod (2) from the third rod (3) of the same upright (M) is enabled by a pressure exerted on the sliding stem (1h) provided in the first rod (1) of said upright (M).

The fact that also the unlocking of the second rod (2) is subject to the actuation of the actuator - i.e. the sliding stem (1h) - guarantees that such unlocking is no longer entrusted to empirical situations that may accidentally cause the uncontrolled unlocking of the second rod (2) of each upright (M) from the third rod (3), as in the prior art.

As mentioned above, the clothes drying rack of the invention (S) is characterized by a more effective use compared to the prior art represented by the clothes drying rack claimed in the utility model no. 279425.

With reference to Figs. 1B and 15, according to the technology described in the aforementioned utility model no. 279425, also in the clothes drying rack of the invention, the upper end (1a, 2a, 3a) of each of said first rod (1), second rod (2) and third rod (3) is forcedly inserted in a sleeve (8, 80) wherefrom a tubular pin (P) and a shelf (71) protrude horizontally, towards the center of the clothes drying rack (S), said shelf (71) defining a vertical hole (7) with a basically square shape.

Also in this case, the first function of an opposite pair of said pins (P) is to act as insertion points for a crossbar (9) suitable for originating a portal-like structure in cooperation with the pair of rods (1, 2, 3).

The shelf (71) usually comprises two lateral edges (71a) that protrude edgeways from the sleeve (8, 80) towards the inside of the clothes drying rack and are joined by a perpendicular front wall.

Likewise the clothes drying rack that is claimed in the utility model, the new clothes drying rack of the invention provides that each one of the tilting grilles (G) is provided at the ends with a pair of hooks (6), each of them being formed of a first rectilinear section (61) that is joined with a second parallel rectilinear section (63) by means of a semicircular section (62), suitable for exactly surrounding a pin (P) and permitting the alternate rotation of the grille (G) around an opposite pair of said pins (P).

Based on the prior art, according to the clothes drying rack of the invention (S), the third rod (3) of each upright (M) is provided with a first sleeve (8) that is identical to the one of the clothes drying rack claimed in the utility model no. 279425.

Vice versa, the second rod (2) and the third rod (3) of each upright (M) of the clothes drying rack of the invention (S) are provided with a second innovative sleeve (80), the main characteristic of which consists in the special configuration of the shelf (71).

With reference to Fig. 15, in said second sleeve (80), the two lateral edges (71a) of the shelf (71) have such a height that the distance (D) between their upper horizontal edge (71a') and the pin (P) is basically equal to the diameter of the metal wire (FM) used to make the grille (G).

As shown in the enlarged detail of Fig. 1B, such a condition guarantees that the two grilles (G) associated with the portal-like structures of the pair of first rods (1) or of the pair of second rods (2) can be spontaneously brought to a considerably spread-out position, from up downwards, after being brought to their non-operating position, facing the ground.

In view of the above, the distance (D1) established in lower position between the two grilles (G) provided in the portal-like structures of the pair of first rods (1) and of the pair of second rods (2) is largely higher than the width (D2) in upper position of the two grilles (G) provided in the portal-like structures of the pair of second rods (2) and of the pair of third rods (3).

Therefore, when the clothes drying rack of the invention is brought to its contracted position as shown in Fig. 1C, the spontaneous effect is such that the two grilles (G) provided in the portal-like structure of the pair of second rods (2) can receive the two grilles (G) provided in the portal-like structure of the pair of third rods (3), without any hindrance and without the need for the user to make a manual operation.

Likewise, with the same advantageous conditions, the two grilles (G) provided in the portal-like structure of the pair of first rods (1) can receive the two grilles (G) provided in the portal-like structure of the pair of second rods (2).

Finally, it must be noted that each one of said sleeves (8, 80) is laterally provided with a radial hole (F10) suitable for being perfectly aligned with said radial holes (F1, F2) respectively provided on the second rod (2) and the third rod (3) and suitable for being alternatively penetrated by said sliding pins (461, 561) of the first locking/unlocking device (400) and of the second locking/unlocking device (5).

## Claims

1. Improved telescopic clothes drying rack (S) comprising a frame composed of two uprights (M), each one formed of a first tubular rod (1), a second tubular rod (2) and a third tubular rod (3) that slide mutually so that the upright (M) can be alternatively disposed in a non-operating contracted position and in an operating extended position,
- wherein each of said rods (1, 2, 3) comprises an upper end (1a, 2a, 3a) and a lower end (1b, 2b, 3b);
- wherein the two first rods (1), the two second rods (2) and the two third rods (3) of said two uprights (M) are connected by means of crossbars (9), in such a way as to form portal-like structures
- wherein each of said uprights (M) internally comprises a first device (400) and a second device (5) suitable for locking or unlocking the mutual sliding of said rods (1, 2, 3), of which the first locking/unlocking device (400) operates between the lower end (1b) of the first rod (1) and the upper end (2a) of the second rod (2), and the second device (5) operates between said lower end (2b) of the second rod (2) and said upper end (3a) of the third rod (3)
- wherein said first locking/unlocking device (400) is engaged in the lower end (1b) of said first rod (1) and said second locking/unlocking device (5) is engaged in the lower end (2b) of said second rod (2 ), wherein said first (400) and second (5) locking/unlocking devices are provided with sliding pins with horizontal axis (461, 561) suitable for engaging into radial holes (F1, F2), respectively provided in the upper end (2a) of the second rod (2) and in the upper end (3a) of the third rod (3) clothes drying rack (S) **characterized in that**
said first (400) and second (5) locking/unlocking device are provided with release buttons (100, 200) respectively associated with vertically sliding tabs (102, 202); wherein, following to a downward sliding movement, said tabs (102, 202) are suitable for enabling the extraction of said pin (461) from the hole (F1) and the extraction of said pin (561) from the hole (F2) wherein said first rod (1) is internally provided with an axially sliding stem (1f), the upper end (1g) of which protrudes from said upper end (1a) of said first rod (1), acting as an actuation button
wherein, after a downward sliding movement, said sliding stem (1f) is suitable for exerting a downward pressure with respect to said release button (100) provided in said first locking/unlocking device (400), by means of which said tab (102) of said button (100) enables the extraction of the pin with horizontal axis (461) from the hole (F1);
wherein said button (100) of said first locking/unlocking device (400) is provided with an additional means (103) suitable for exerting a pressure on said release button (200) of said locking/unlocking device (5) during the descending travel of said button (100), in such a way that said tab (202) provided in said button (200) enables the extraction of said pin with horizontal axis (561) of said second locking/unlocking device (5) from the hole (F2).

2. The clothes drying rack of claim 1, wherein, with reference to said button (100) of the first locking/unlocking device (400), said means suitable for exerting a pressure on the release button (200) of the second locking/unlocking device (5) consists in a second tab (103) provided in lower position with a horizontal section (103b) suitable for protruding in lower position from said first locking/unlocking device (400) until it interferes with said button (200) of said second locking/unlocking device (5).

3. The clothes drying rack of one of the preceding claims, wherein:
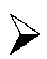 said second locking/unlocking device (5) is provided with a shell that comprises:
∘ an upper wall (51),
∘ a lower wall (52),
∘ a first lateral wall (53) provided with the outlet of a conduit with horizontal axis (57) closed on the bottom by a vertical wall (570); wherein said conduit (57) acts as housing for a cursor (58) that is subject to the action of an elastic return element (572) and is frontally provided with said pin with horizontal axis (461),
∘ a second lateral wall (54) in opposite position to the first lateral wall (53);
wherein said release button (200) of said second locking/unlocking device (5) is engaged in the upper wall (51) and comprises said vertical tab (202) under said flat head (201), which is suitable for alternatively sliding inside a housing that is basically obtained in the center of said second locking/unlocking device (5);
wherein said tab (202) is provided with a point (202a) provided with 45°-profile, which is suitable for being disposed in immediately higher position than the conduit with horizontal axis (57) when said button (200) is in raised position, and also suitable for being progressively engaged into a niche (59) provided above said cursor (58), when the button (200) is pressed downwards, imposing such a backward travel to said cursor (58) that said pin (561) protrudes from the hole (F2) provided in the upper end (3a) of the third rod (3) and is completely brought inside said conduit (57);
wherein said button (200) operates in the vertical space comprised between two columns (531, 541) that protrude from said upper horizontal wall (51) in alignment with said first lateral wall (53) and second lateral wall (54) of said second locking/unlocking device (5) and wherein said second column (541) is provided with a notch (541a) for its entire height 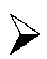
said first locking/unlocking device (400) is provided with a shell that comprises:
∘ an upper wall (41),
∘ a lower wall (42),
∘ a first lateral wall (53) provided with the outlet of a conduit with horizontal axis (57) closed on the bottom by a vertical wall (570); wherein said conduit (57) acts as housing for a slider (58) that is subject to the action of an elastic return element (572) and is frontally provided with said pin with horizontal axis (461),
∘ a second lateral wall (44) opposite to the first lateral wall (43), and provided with a vertical groove (45) that is joined in lower position with a horizontal groove (46) obtained in said lower wall (42);
wherein said first locking/unlocking device (400) is suitable for resting its lower wall against the two columns (531, 541) provided in said second locking/unlocking device (5), when said first rod (1) has completed its descending travel inside the second rod (2);
wherein said release button (100) of said first locking/unlocking device (400) is mounted in said upper wall (41) and comprises, under said enlarged head (101):
∘ said first tab (102) suitable for alternately sliding inside a corresponding vertical housing that is basically obtained in the center of said first locking/unlocking device (4); wherein said first tab (102) has a point (102a) with a 45° profile with inclination towards said second lateral wall (44) and is disposed, when the button (100) is raised, in immediately higher position than said horizontal conduit (47) where the pin (461) slides, and is also suitable, when said button (100) is pressed downwards, for being progressively engaged into a niche (485) provided above said cursor (48), imposing such a backward travel to said cursor (48) that said pin (461) protrudes from the hole (F1) and is completely brought inside said conduit (47);
∘ said second tab (103) is provided with a substantially "L"-shaped profile, comprising a vertical segment (103a) joined in lower position with said horizontal segment (103b), the vertical segment (103a) being suitable for alternatively sliding inside said vertical groove (45) provided on said second lateral wall (44), the horizontal segment (103b) being suitable for being alternatively maintained inside said groove (46) provided on said lower wall (42) according to the travels imposed on said second tab (103), or for protruding downwards from said groove (46) in such a way that said horizontal branch (103b) can exert a pressure on the button (200) provided in said second locking/unlocking device (5), following to a downward travel made through the notch (541a) of the column (541) of the second locking/unlocking device (5).

4. The clothes drying rack of one of the preceding claims, wherein:
- said release button (100) of said first locking/unlocking device (400) cooperates with a helical spring with vertical axis (110) externally inserted on its first tab (102), in a position comprised between the enlarged head (101) of said button (100) and the upper wall (41) of said first device (400)
- said release button (200) of said second locking/unlocking device (5) cooperates with a helical spring with vertical axis (210) externally inserted on its tab (202), in a position comprised between a horizontal disc (201a) provided in lower position on the enlarged head (201) of said button (200) and the upper wall (51) of said second locking/unlocking device (5)
- said cursor (48) of said first locking/unlocking device (400) cooperates with a helical spring with horizontal axis (49) inserted between a cylindrical ridge (483) that protrudes from the back wall (482) of said cursor (48) and a corresponding cylindrical ridge (471) that protrudes from said bottom wall (470) of the conduit (47)
- said cursor (58) of said second locking/unlocking device (5) cooperates with a helical spring with horizontal axis (572) inserted between a cylindrical ridge (583) that protrudes from the back wall (582) of said cursor (58) and a corresponding cylindrical ridge (571) that protrudes from said bottom wall (570) of the conduit (57).

5. The clothes drying rack of claim 1:
- wherein a tilting grille (G) made of metal wire (FM) is provided on each side of each portal-like structure of the first rods (1), of the second rods (2) and of the third rods (3) of the two uprights (M), said tilting grille (G) being provided at the two ends with hooks (6), each of them formed of:
∘ a first rectilinear section (61) perpendicular to the plane where the tilting grille (G) lies
∘ a second semicircular section (62)
∘ a third rectilinear section (63) parallel to said first section (61), to which it is joined by means of said second semicircular section (62)
- wherein the upper end (3a) of the third rod (3) of each upright (M) is inserted into a first sleeve (8), whereas the upper ends (1a, 2a) of the first rod (1) and of the second rod (2) of each upright (M) are inserted into a second sleeve (80); wherein said first sleeve (8) and second sleeve (80) are provided with a tubular pin (P) with horizontal axis towards the center of the clothes drying rack (S);
- wherein a pair of said tubular pins (P) of an opposite pair of said sleeves (8, 80) is suitable for housing the two ends of a crossbar (9) used to join the first rods (1), the second rods (2) and the third rods (3) of the two uprights (M)
- wherein the tubular pins (P) provided in the two first rods (1), in the two second rods (2) and in the two third rods (3) of the two uprights (M) are the fixing and rotating points for said hooks (6) provided at the two ends of each tilting grille (G)
- wherein each of said sleeves (8, 80) is provided with a shelf (71) that defines a hole with vertical axis (7), under said tubular pin (P); wherein each of said shelves (71) is formed of two parallel edges (71a) that protrude edgeways towards the interior of the clothes drying rack (S) and frontally joined by a connection wall;
- wherein each of said sleeves (8, 80) is laterally provided with a hole (F10) suitable for receiving said horizontally sliding pins (461, 561) provided in said first (4) and second (5) locking/unlocking devices, with possibility of alternatively sliding;
- wherein said lateral edges (71a) of the shelf (71) provided in said second sleeve (80) have such a height that the upper horizontal edges (71a') are disposed relative to the tubular pin (P) at a distance (D) that is basically equal to the diameter of the metal wire (FM) used to make the hooks (6) of each tilting grille (G).

## Patentansprüche

1. Verbesserter teleskopischer Wäscheständer (S), umfassend ein Gestell, bestehend aus zwei Stützen (M), die jeweils aus einer ersten rohrförmigen Stange (1), einer zweiten rohrförmigen Stange (2) und einer dritten rohrförmigen Stange (3) gebildet sind, die zueinander verschiebbar sind, so dass die Stütze (M) abwechselnd in einer zurückgezogenen Ruhestellung und in einer ausgezogenen Arbeitsstellung angeordnet werden kann,
- wobei jede dieser Stangen (1, 2, 3) jeweils einen oberen Endabschnitt (1a, 2a, 3a) und einen unteren Endabschnitt (1b, 2b, 3b) umfasst;
- wobei die beiden ersten Stangen (1), die beiden zweiten Stangen (2) und die beiden dritten Stangen (3) der beiden Stützen (M) mit Querträgern (9) verbunden sind, so dass portalartige Strukturen gebildet werden
- wobei jede der Stützen (M) im Inneren eine erste Vorrichtung (400) und eine zweite Vorrichtung (5) umfasst, die dazu geeignet sind, die gegenseitige Verschiebung der Stangen (1, 2, 3) zu sperren oder entsperren, von denen die erste Sperrvorrichtung/Entsperrvorrichtung (400) zwischen dem unteren Endabschnitt (1b) der ersten Stange (1) und dem oberen Endabschnitt (2a) der zweiten Stange (2) wirkt und die zweite Vorrichtung (5) zwischen dem unteren Endabschnitt (2b) der zweiten Stange (2) und dem oberen Endabschnitt (3a) der dritten Stange (3) wirkt
- wobei die erste Sperrvorrichtung/Entsperrvorrichtung (400) an dem unteren Endabschnitt (1b) der ersten Stange (1) eingespannt ist und die zweite Sperrvorrichtung/Entsperrvorrichtung (5) an dem unteren Endabschnitt (2b) der zweiten Stange (2) eingespannt ist, wobei die erste (400) und die zweite (5) Sperrvorrichtungen/Entsperrvorrichtungen mit horizontalachsigen Gleitzapfen (461, 561) versehen sind, die dazu geeignet sind, in radiale Löcher (F1, F2) einzufallen, die jeweils an dem oberen Endabschnitt (2a) der zweiten Stange (2) und an dem oberen Endabschnitt (3a) der dritten Stange (3) bereitgestellt sind
wobei der Wäscheständer (S) **dadurch gekennzeichnet ist, dass** die erste (400) und die zweite (5) Sperrvorrichtungen/Entsperrvorrichtungen mit Entriegelungstasten (100, 200) versehen sind, die jeweils mit vertikalen Schiebelaschen (102, 202) verbunden sind; wobei die Laschen (102, 202) nach dem Abwärtsschieben dazu geeignet sind, das Ausfahren des Zapfens (461) aus dem Loch (F1) und das Ausfahren des Zapfens (561) aus dem Loch (F2) zu ermöglichen
wobei die erste Stange (1) im Inneren mit einem axialen Schiebeschaft (1f) versehen ist, dessen oberer Endabschnitt (1g) aus dem oberen Endabschnitt (1a) der ersten Stange (1) hervorsteht und als Betätigungstaste fungiert
wobei der Schiebeschaft (1f) nach dem Abwärtsschieben dazu geeignet ist, einen Druck nach unten auf die Entriegelungstaste (100) auszuüben, die in der ersten Sperrvorrichtung/Entsperrvorrichtung (400) bereitgestellt ist, dank welcher die Lasche (102) der Taste (100) das Ausfahren des horizontalachsigen Zapfens (461) aus dem Loch (F1) ermöglicht;
wobei die Taste (100) der ersten Sperrvorrichtung/Entsperrvorrichtung (400) mit einem weiteren Mittel (103) versehen ist, das in der Lage ist, während des Abwärtshubs der Taste (100) einen Druck auf die Entriegelungstaste (200) der zweiten Sperrvorrichtung/Entsperrvorrichtung (5) auszuüben, so dass die Lasche (202), die in der Taste (200) bereitgestellt ist, das Ausfahren des horizontalachsigen Zapfens (561) der zweiten Sperrvorrichtung/Entsperrvorrichtung (5) aus dem Loch (F2) ermöglicht.

2. Wäscheständer nach Anspruch 1, wobei unter Bezugnahme auf die Taste (100) der ersten Sperrvorrichtung/Entsperrvorrichtung (400), das Mittel, das geeignet ist, Druck auf die Entriegelungstaste (200) der zweiten Sperrvorrichtung/Entsperrvorrichtung (5) auszuüben, aus einer zweiten Lasche (103) besteht, die in einer unteren Position mit einem horizontalen Abschnitt (103b) versehen ist, der dazu geeignet ist, in der unteren Position aus der ersten Sperrvorrichtung/Entsperrvorrichtung (400) hervorzustehen, bis er in die Taste (200) der zweiten Sperrvorrichtung/Entsperrvorrichtung (5) eingreift.

3. Wäscheständer nach einem der vorstehenden Ansprüche, wobei:
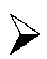 die zweite Sperrvorrichtung/Entsperrvorrichtung (5) mit einem Mantel versehen ist, der Folgendes umfasst:
∘ eine obere Wand (51),
∘ eine untere Wand (52),
∘ eine erste Seitenwand (53), die mit dem Auslass einer horizontalachsigen Leitung (57) versehen ist, die am Boden durch eine vertikale Wand (570) geschlossen ist; wobei die Leitung (57) als Sitz für einen Schieber (58) fungiert, der unter der Wirkung eines elastischen Rückholelements (572) steht und auf der Vorderseite mit dem horizontalachsigen Zapfen (461) versehen ist,
∘ eine zweite Seitenwand (54), die der ersten Seitenwand (53) gegenüberliegt;
wobei die Entriegelungstaste (200) der zweiten Sperrvorrichtung/Entsperrvorrichtung (5) an der oberen Wand (51) eingespannt ist und unter dem flachen Kopf (201) die vertikale Lasche (202) umfasst, die dazu geeignet ist, abwechselnd in einem Sitz zu gleiten, der im Wesentlichen im Mittelpunkt der zweiten Sperrvorrichtung/Entsperrvorrichtung (5) herausgearbeitet ist;
wobei die Lasche (202) eine Spitze (202a) mit einem 45°-Profil aufweist, die in der Lage ist, in etwas höherer Position als die horizontalachsige Leitung (57) angeordnet zu werden, wenn die Taste (200) sich in angehobener Position befindet, aber ebenso in der Lage ist, allmählich in eine entsprechende Nische (59) einzufallen, die über dem Schieber (58) vorgesehen ist, wenn die Taste (200) nach unten gedrückt wird, wodurch dem Schieber (58) ein Rückwärtshub aufgezwungen wird, so dass der Zapfen (561) aus dem Loch (F2) heraustritt, das auf dem oberen Endabschnitt (3a) der dritten Stange (3) vorgesehen ist, und vollständig in das Innere der Leitung (57) einfällt;
wobei die Taste (200) in dem vertikalen Raum zwischen zwei Säulen (531, 541) wirkt, die aus der oberen horizontalen Wand (51) in Fluchtung mit der ersten Seitenwand (53) und der zweiten Seitenwand (54) der zweiten Sperrvorrichtung/Entsperrvorrichtung (5) hervorstehen und
wobei die zweite Säule (541) über ihre gesamte Höhe mit einem Schlitz (541a) versehen ist
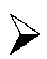 die erste Sperrvorrichtung/Entsperrvorrichtung (400) mit einem Mantel versehen ist, der Folgendes umfasst:
∘ eine obere Wand (41),
∘ eine untere Wand (42),
∘ eine erste Seitenwand (53), die mit dem Auslass einer horizontalachsigen Leitung (57) versehen ist, die am Boden durch eine vertikale Wand (570) geschlossen ist; wobei die Leitung (57) als Sitz für einen Schieber (58) fungiert, der unter der Wirkung eines elastischen Rückholelements (572) steht und auf der Vorderseite mit dem horizontalachsigen Zapfen (461) versehen ist,
∘ eine zweite Seitenwand (44), die der ersten Seitenwand (43) gegenüberliegt und mit einer vertikalen Nut (45) versehen ist, die in einer unteren Position mit einer horizontalen Nut (46) verbunden ist, die in der unteren Wand (42) herausgearbeitet ist;
wobei die erste Sperrvorrichtung/Entsperrvorrichtung (400) dazu geeignet ist, ihre untere Wand gegen die beiden Säulen (531, 541) in Anlage zu bringen, die in der zweiten Sperrvorrichtung/Entsperrvorrichtung (5) bereitgestellt sind, wenn die erste Stange (1) ihren Abwärtshub im Inneren der zweiten Stange (2) beendet hat;
wobei die Entriegelungstaste (100) der ersten Sperrvorrichtung/Entsperrvorrichtung (400) an der oberen Wand (41) montiert ist und unter dem vergrößerten Kopf (101) Folgendes umfasst:
∘ die erste Lasche (102), die dazu geeignet ist, abwechselnd in einem vertikalen Sitz zu gleiten, der im Wesentlichen im Mittelpunkt der ersten Sperrvorrichtung/Entsperrvorrichtung (4) herausgearbeitet ist; wobei die erste Lasche (102) eine Spitze (102a) mit einem 45°-Profil aufweist, deren Neigung zu der zweiten Seitenwand (44) gerichtet und bei angehobener Taste (100) in etwas höherer Position als die horizontale Leitung (47), in der der Zapfen (461) gleitet, angeordnet ist, die aber ebenso in der Lage ist, wenn die Taste (100) nach unten gedrückt wird, allmählich in eine Nische (485) einzufallen, die über dem Schieber (48) vorgesehen ist, wodurch dem Schieber (48) ein Rückwärtshub aufgezwungen wird, so dass der Zapfen (461) aus dem Loch (F1) heraustritt und vollständig in das Innere der Leitung (47) gebracht wird;
∘ die zweite Lasche (103), die ein im Wesentlichen L-förmiges Profil aufweist, umfassend einen vertikalen Abschnitt (103a), der in einer unteren Position an den horizontalen Abschnitt (103b) angeschlossen ist, wobei der vertikale Abschnitt (103a) dazu geeignet ist, abwechselnd in der vertikalen Nut (45) zu gleiten, die auf der zweiten Seitenwand (44) herausgearbeitet ist und wobei der horizontale Abschnitt (103b) dazu geeignet ist, abwechslungsweise in Abhängigkeit von den der zweiten Lasche (103) auferlegten Hüben im Inneren der Nut (46) gehalten zu werden, die auf der unteren Wand (42) bereitgestellt ist, oder aus dieser Nut (46) nach unten hervorzutreten, so dass der horizontale Abschnitt (103b) in der Lage ist, nach einem Abwärtshub durch den Schlitz (541a) der Säule (541) der zweiten Sperrvorrichtung/Entsperrvorrichtung (5), einen Druck auf die Taste (200) auszuüben, die in der Sperrvorrichtung/Entsperrvorrichtung (5) bereitgestellt ist.

4. Wäscheständer nach einem der vorstehenden Ansprüche, wobei:
- die Entriegelungstaste (100) der ersten Sperrvorrichtung/Entsperrvorrichtung (400) mit einer vertikalachsigen schraubenförmigen Feder (110) zusammenwirkt, die außen in ihre erste Lasche (102) eingesteckt ist, in einer Position zwischen dem vergrößerten Kopf (101) der Taste (100) und der oberen Wand (41) der ersten Vorrichtung (400)
- die Entriegelungstaste (200) der zweiten Sperrvorrichtung/Entsperrvorrichtung (5) mit einer vertikalachsigen schraubenförmigen Feder (210) zusammenwirkt, die außen in ihre Lasche (202) eingesteckt ist, in einer Position zwischen einer horizontalen Scheibe (201a), die in einer unteren Position auf dem vergrößerten Kopf (201) der Taste (200) bereitgestellt ist, und der oberen Wand (51) der zweiten Sperrvorrichtung/Entsperrvorrichtung (5)
- der Schieber (48) der ersten Sperrvorrichtung/Entsperrvorrichtung (400) mit einer horizontalachsigen schraubenförmigen Feder (49) zusammenwirkt, die zwischen einer zylindrischen Leiste (483), die aus der hinteren Wand (482) des Schiebers (48) hervorsteht, und einer entsprechenden zylindrischen Leiste (471), die aus der Bodenwand (470) der Leitung (47) hervorsteht, eingefügt ist
- der Schieber (58) der zweiten Sperrvorrichtung/Entsperrvorrichtung (5) mit einer horizontalachsigen schraubenförmigen Feder (572) zusammenwirkt, die zwischen einer zylindrischen Leiste (583), die aus der hinteren Wand (582) des Schiebers (58) hervorsteht, und einer entsprechenden zylindrischen Leiste (571), die aus der Bodenwand (570) der Leitung (57) hervorsteht, eingefügt ist.

5. Wäscheständer nach Anspruch 1:
- wobei auf jeder Seite einer jeden portalartigen Struktur der ersten Stäbe (1), der zweiten Stäbe (2) und der dritten Stäbe (3) der beiden Stützen (M) ein kippbares Gitter (G) bereitgestellt sind, das aus Metalldraht (FM) hergestellt und an den beiden Endabschnitten mit Haken (6) versehen ist, die jeweils gebildet sind aus:
∘ einem ersten geradlinigen Abschnitt (61), der senkrecht zu der Ebene ist, auf der das jeweilige kippbare Gitter (G) aufliegt
∘ einem zweiten halbkreisförmigen Abschnitt (62)
∘ einem dritten geradlinigen Abschnitt (63), der parallel zu dem ersten Abschnitt (61) ist, mit dem er durch den zweiten halbkreisförmigen Abschnitt (62) verbunden ist
- wobei der obere Endabschnitt (3a) der dritten Stange (3) einer jeden Stütze (M) in eine erste Muffe (8) eingesteckt ist, während die oberen Endabschnitte (1a, 2a) der ersten Stange (1) und der zweiten Stange (2) einer jeden Stütze (M) in eine zweite Muffe (80) eingesteckt sind; wobei die erste Muffe (8) und die zweite Muffe (80) in Richtung des Mittelpunkts des Wäscheständers (S) einen horizontalachsigen rohrförmigen Zapfen (P) aufweisen;
- wobei ein Paar der rohrförmigen Zapfen (P) eines Paares von gegenüberliegenden Muffen (8, 80) geeignet ist, die beiden Endabschnitte eines Querträgers (9) aufzunehmen, der geeignet ist, die ersten Stangen (1), die zweiten Stangen (2) und die dritten Stangen (3) der beiden Stützen (M) aufzunehmen
- wobei die rohrförmigen Zapfen (P), die in den beiden ersten Stangen (1), den beiden zweiten Stangen (2) und den beiden dritten Stangen (3) der beiden Stützen (M) bereitgestellt sind, die Befestigungs- und Drehpunkte für die Haken (6) darstellen, die an den beiden Endabschnitten des kippbaren Gitters (G) bereitgestellt sind
- wobei jede der Muffen (8, 80) unter dem rohrförmigen Zapfen (P) mit einer Konsole (71) versehen ist; wobei jede der Konsolen (71) aus zwei parallelen Kanten (71a) gebildet ist, die hochkant ins Innere des Wäscheständers (S) hervorstehen und vorderseitig durch eine Verbindungswand verbunden sind;
- wobei jede der Muffen (8, 80) seitlich mit einem Loch (F10) versehen ist, das dazu geeignet ist, die horizontal gleitenden Zapfen (461, 561), die in den ersten (4) und den zweiten (5) Sperrvorrichtungen/Entsperrvorrichtungen bereitgestellt sind, aufzunehmen;
- wobei die seitlichen Kanten (71a) der Konsole (71), die in der zweiten Muffe (80) bereitgestellt sind, eine derartige Höhe aufweisen, dass die oberen horizontalen Kanten (71a') relativ zu dem rohrförmigen Zapfen (P) in einem Abstand (D) angeordnet sind, der im Wesentlichen dem Durchmesser des Metalldrahts (FM) entspricht, aus dem die Haken (6) eines jeden kippbaren Gitters (G) hergestellt sind.

## Revendications

1. Étendoir à linge télescopique perfectionné (S) comprenant un châssis composé de deux montants (M), chacun formé par une première tige tubulaire (1), une deuxième tige tubulaire (2) et une troisième tige tubulaire (3), coulissantes de manière réciproque de façon que le respectif montant (M) puisse assumer alternativement une position non opérationnelle rétractée et une position opérationnelle allongée,
- où chacune des dites tiges (1, 2, 3) comprend une correspondante extrémité supérieure (1a, 2a, 3a) et une correspondante extrémité inférieure (1b, 2b, 3b) ;
- où les deux premières tiges (1), les deux deuxièmes tiges (2) et les deux troisièmes tiges (3) qui appartiennent aux deux susdits montants (M) sont reliées moyennant des traverses respectives (9), de façon à former des respectives structures en forme de portail
- où chacun des dits montants (M) comprend à l'intérieur un premier dispositif (400) et un second dispositif (5) aptes à bloquer ou débloquer le coulissement réciproque des dites respectives tiges (1, 2, 3), desquels le premier dispositif de blocage/déblocage (400) fonctionne entre ladite extrémité inférieure (1b) de la première tige (1) et ladite extrémité supérieure (2a) de la deuxième tige (2) et le second dispositif (5) fonctionne entre ladite extrémité inférieure (2b) de la deuxième tige (2) et ladite extrémité supérieure (3a) de la troisième tige (3)
- où ledit premier dispositif de blocage/déblocage (400) est embrayé en correspondance de l'extrémité inférieure (1b) de ladite première tige (1) et ledit second dispositif de blocage/déblocage (5) est embrayé en correspondance de l'extrémité inférieure (2b) de ladite deuxième tige (2), où lesdits premier (400) et second (5) dispositifs de blocage/déblocage sont dotés de respectifs goujons coulissants ayant axe horizontal (461, 561), aptes à se loger dans des correspondants orifices radiaux (F1, F2), respectivement prévus en correspondance de l'extrémité supérieure (2a) de la deuxième tige (2) et en correspondance de l'extrémité supérieure (3a) de la troisième tige (3)
étendoir à linge (S) **caractérisé en ce que**
lesdits premier (400) et second (5) dispositifs de blocage/déblocage sont dotés de correspondants boutons de déblocage (100, 200) respectivement associés à des sous-jacentes lamelles coulissantes à la verticale (102, 202) ; où lesdites lamelles (102, 202) sont aptes à activer respectivement, suite à leur coulissement vers le bas, l'extraction du dit goujon (461) de son orifice d'emplacement (F1) et l'extraction du dit goujon (561) de son orifice d'emplacement (F2)
où ladite première tige (1) présente à l'intérieur une tige coulissante axialement (1f), dont l'extrémité supérieure (1g) déborde de ladite extrémité supérieure (1a) de ladite première tige (1), en fonctionnant comme bouton d'actionnement
où ladite tige coulissante (1f) résulte apte, suite à son coulissement vers le bas, à exercer une pression vers le bas sur ledit bouton de déblocage (100) qui équipe ledit premier dispositif de blocage/déblocage (400), grâce à laquelle ladite lamelle (102) du dit bouton (100) active l'extraction du goujon correspondant ayant axe horizontal (461) de son correspondant orifice d'emplacement (F1) ;
où ledit bouton (100) du dit premier dispositif de blocage/déblocage (400) est équipé d'un moyen supplémentaire (103) qui résulte capable, lors de la descente vers le bas du dit bouton (100), d'exercer une pression sur ledit bouton de blocage/déblocage (200) du dit second dispositif de déblocage (5), de façon à ce que ladite lamelle (202) qui équipe ledit bouton (200) active l'extraction du dit goujon ayant axe horizontal (561) du dit second dispositif de blocage/déblocage (5) de son correspondant orifice d'emplacement (F2).

2. Étendoir à linge selon la revendication 1, où, avec référence ledit bouton (100) du premier dispositif de blocage/déblocage (400), ledit moyen apte à exercer une pression sur ledit bouton de déblocage (200) du second dispositif de blocage/déblocage (5) consiste en une seconde lamelle (103) qui présente inférieurement une branche horizontale (103b) apte à déborder inférieurement du dit premier dispositif de blocage/déblocage (400), jusqu'à interférer sur ledit bouton (200) du dit second dispositif de blocage/déblocage (5).

3. Étendoir à linge selon l'une des revendications précédentes, où :
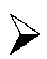 ledit second dispositif de blocage/déblocage (5) est muni d'une coque qui comprend :
∘ une cloison supérieure (51),
∘ une cloison inférieure (52),
∘ une première cloison latérale (53) qui présente l'orifice de sortie d'un conduit ayant axe horizontal (57) fermé sur le fond par une correspondante cloison verticale (570) ; où ledit conduit (57) fonctionne en tant que siège de coulissement et guide pour un curseur (58) qui résulte assujetti à l'action d'un respectif élément élastique de rappel (572) qui est présent à l'avant ledit goujon ayant axe horizontal (461),
∘ une seconde cloison latérale (54), opposée à la première cloison latérale (53) ;
où ledit bouton de déblocage (200) du dit second dispositif de blocage/déblocage (5) résulte embrayé en correspondance de ladite cloison supérieure (51) et comprend, au-dessous de la dite tête plate (201), ladite lamelle verticale (202) logée, avec capacité de coulissement alterné, dans un emplacement correspondant réalisé essentiellement au centre du dit second dispositif de blocage/déblocage (5) ;
où ladite lamelle (202) présente une pointe (202a) munie d'un profil à 45°, apte à se disposer, en position soulevée du dit bouton (200), en position à peine sus-jacente au dit conduit ayant axe horizontal (57), mais également capable, lorsque ledit bouton (200) est appuyé vers le bas, de se loger progressivement dans une niche conforme (59) prévue au-dessus du dit curseur (58), avec l'effet d'imposer au dit curseur (58) une course de recul telle que ledit goujon (561) déborde du dit orifice d'emplacement (F2) prévu en correspondance de l'extrémité supérieure (3a) de la troisième tige (3) et se déplace entièrement à l'intérieur du dit conduit (57) ;
où ledit bouton (200) fonctionne dans l'espace vertical compris entre deux colonnes (531, 541), qui débordent de ladite cloison horizontale supérieure (51) en respectif alignement avec lesdites première cloison latérale (53) et seconde cloison latérale (54) du dit second dispositif de blocage/déblocage (5) et où ladite seconde colonne (541) présente une entaille (541a) sur toute sa hauteur
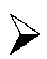 ledit premier dispositif de blocage/déblocage (400) présente une coque qui comprend :
∘ une cloison supérieure (41),
∘ une cloison inférieure (42),
∘ une première cloison latérale (53) qui présente l'orifice de sortie d'un conduit ayant axe horizontal (57), fermé sur le fond par une correspondante cloison verticale (570) ; où ledit conduit (57) fonctionne en tant que siège de coulissement et guide pour un curseur (58) qui résulte assujetti à l'action d'un respectif élément élastique de rappel (572) qui est présent à l'avant du dit goujon ayant axe horizontal (461),
∘ une seconde cloison latérale (44), opposée à la première cloison latérale (43), dotée d'une rainure verticale (45) qui se relie inférieurement avec une rainure horizontale (46) réalisée en correspondance de ladite cloison inférieure (42) ;
où ledit premier dispositif de blocage/déblocage (400) est apte, lorsque ladite première tige (1) a complété sa course de descente à l'intérieur de la deuxième tige (2), à s'appuyer avec sa cloison inférieure contre les deux dites colonnes (531, 541) qui équipent ledit second dispositif de blocage/déblocage (5) ;
où ledit bouton de déblocage (100) du dit premier dispositif de blocage/déblocage (400) résulte monté en correspondance de ladite cloison supérieure (41) et comprend, inférieurement à ladite tête élargie (101) :
∘ ladite première lamelle (102) apte à coulisser alternativement dans un correspondant emplacement vertical réalisé essentiellement au centre du dit premier dispositif de blocage/déblocage (4) ; où ladite première lamelle (102) présente une pointe (102a) ayant un profil à 45° avec l'inclinaison orientée vers ladite seconde cloison latérale (44) et qui se dispose, en position soulevée du bouton (100), dans une position à peine sus-jacente au dit conduit horizontal (47) de coulissement du goujon (461), mais qui résulte également capable, lorsque ledit bouton (100) est appuyé vers le bas, de se loger progressivement dans une niche conforme (485) prévue supérieurement au dit curseur (48), avec l'effet d'imposer au dit curseur (48) une course de recul telle que ledit goujon (461) déborde du dit orifice d'emplacement (F1) et se déplace entièrement à l'intérieur du dit conduit (47) ;
∘ ladite seconde lamelle (103) qui résulte dotée d'un profil essentiellement en forme de « L », car comprenant une branche verticale (103a) reliée inférieurement à ladite branche horizontale (103b), desquelles la branche verticale (103a) résulte apte à coulisser alternativement dans ladite rainure verticale (45) prévue sur ladite seconde cloison latérale (44) et la relative branche horizontale (103b) résulte apte alternativement, en fonction des courses imposées à ladite seconde lamelle (103), à se maintenir exactement à l'intérieur de ladite rainure (46) prévue sur ladite cloison inférieure (42) ou à sortir de ladite rainure (46) vers le bas, de façon que ladite branche horizontale (103b) puisse arriver, à la suite d'une course vers le bas accomplie à travers ladite entaille (541a) de ladite colonne (541) du second dispositif de blocage/déblocage (5), à exercer une pression sur ledit bouton (200) dont est équipé ledit second dispositif de blocage/déblocage (5).

4. Étendoir à linge selon l'une des revendications précédentes, où :
- ledit bouton de déblocage (100) du dit premier dispositif de blocage/déblocage (400) coopère avec un ressort hélicoïdal ayant axe vertical (110) enfilé sur l'extérieur de sa première lamelle (102), dans une position comprise entre la tête élargie (101) du dit bouton (100) et la cloison supérieure (41) du dit premier dispositif (400)
- ledit bouton de déblocage (200) du dit second dispositif de blocage/déblocage (5) coopère avec un ressort hélicoïdal ayant axe vertical (210) enfilé sur l'extérieur de sa ladite lamelle (202), dans une position comprise entre un disque horizontal (201a) prévu inférieurement à la tête élargie (201) du dit bouton (200) et la cloison supérieure (51) du dit second dispositif de blocage/déblocage (5)
- ledit curseur (48) du dit premier dispositif de blocage/déblocage (400) coopère avec un ressort hélicoïdal ayant axe vertical (49) inséré entre une arête cylindrique (483) qui déborde de la cloison postérieure (482) du dit curseur (48) et une arête cylindrique (471) correspondante qui déborde de ladite cloison de fond (470) du conduit (47)
- ledit curseur (58) du dit second dispositif de blocage/déblocage (5) coopère avec un ressort hélicoïdal ayant axe horizontal (572), inséré entre une arête cylindrique (583) qui déborde de la cloison postérieure (582) du dit curseur (58) et une arête cylindrique (571) correspondante qui déborde de ladite cloison de fond (570) du conduit (57).

5. Étendoir à linge selon la revendication 1 :
- où est prévue une grille basculante (G) réalisée en fil métallique (FM) sur chaque côté de chacune des dites structures en forme de portail relatives aux premières tiges (1), aux deuxièmes tiges (2) et aux troisièmes tiges (3) des deux dits montants (M), ladite grille basculante (G) étant munie aux deux extrémités de crochets (6), chacun desquels formé par :
∘ un premier segment (61) rectiligne et perpendiculaire au plan de la correspondante grille basculante (G)
∘ un deuxième segment semi-circulaire (62)
∘ un troisième segment (63) rectiligne et parallèle au dit premier segment (61), avec lequel il est relié par le biais du dit deuxième segment semi-circulaire (62)
- où l'extrémité supérieure (3a) de la troisième tige (3) de chaque montant (M) résulte embrayée dans un premier manchon (8), tandis que les extrémités supérieures (1a, 2a) de la première tige (1) et de la deuxième tige (2) de chaque montant (M) sont embrayées dans un second manchon (80) ; où ledit premier manchon (8) et le second manchon (80) présentent, en direction du centre de l'étendoir à linge en objet (S), un pivot tubulaire (P) ayant axe horizontal ;
- où une paire des dits pivots tubulaires (P) qui appartiennent à une paire opposée des dits manchons (8, 80) est apte à loger les deux extrémités d'une traverse (9) correspondante apte à relier les premières tiges (1), les deuxièmes tiges (2) et les troisièmes tiges (3) qui appartiennent aux deux montants (M)
- où les pivots tubulaires (P) dont sont dotées les deux premières tiges (1), les deux deuxièmes tiges (2) et les deux troisièmes tiges (3) des deux montants (M) constituent les points d'accrochage et de rotation des dits crochets (6) prévus aux deux extrémités de chacune des dites grilles basculantes (G)
- où chacun des dits manchons (8, 80) présente, inférieurement au dit pivot tubulaire (P) correspondant, une tablette (71) correspondante qui délimite un orifice ayant axe vertical (7) ; où chacune de ces tablettes (71) résulte formée de deux rebords parallèles (71a) qui débordent de chant vers l'intérieur de l'étendoir à linge (S) et unies à l'avant par une cloison de raccordement ;
- où chacun des dits manchons (8, 80) présente latéralement un orifice (F10) correspondant apte à loger, avec possibilité de coulissement alterné, lesdits goujons coulissants à l'horizontale (461, 561) dont sont dotés lesdits premier (4) et second (5) dispositifs de blocage/déblocage ;
- où lesdits rebords latéraux (71a) de ladite tablette (71) dont est doté le second manchon (80) ont une hauteur telle que leurs respectifs bords horizontaux de sommet (71a') se disposent, par rapport au sus-jacent pivot tubulaire (P), à une distance (D) essentiellement égale au diamètre du fil métallique (FM) avec lequel sont réalisés lesdits crochets (6) de chacune des grilles basculantes (G).
